# EUROPEAN PATENT APPLICATION

(11) **EP 1 236 669 A1**
(43) Date of publication of application: **04.09.2002**
(21) Application number: 02100133.4
(22) Date of filing: 13.02.2002
(51) Int. Cl.: B65H 75/02, B29D 30/52, B29C 31/00, B65H 18/10, B65H 16/10, B65H 18/28, B65H 19/30, B65H 23/00

(54) **Method and apparatus for storing strip material**

(30) Priority: 20.02.2001 US 789082
(71) Applicant: THE GOODYEAR TIRE & RUBBER COMPANY, Akron, Ohio 44316-0001 (US)
(72) Inventor: KUBINSKI, Donald Chester, 44256, Medina (US); LEMAIRE, Erich Nikolaus, L-9764, Marnach (LU); KRACK, Norbert François, L-7790, Bissen (LU); THEISMAN, Marc Camille Susan, 6700, Freylange - Arlon (BE)
(74) Representative: Leitz, Paul

(57) **Abstract**

The present invention discloses a tandem mobile cartridge (100) for loading, storing and delivering continuous elastomeric strips (10) of tire material from a forming station to a tire building station.

## Description

### Field of the Invention

The present invention is directed toward a method and apparatus for storing strip material. More specifically, the present invention is directed towards a method and apparatus for positioning a continuous strip of material onto a spool.

### Background of the Invention

The present discussion is directed specifically towards the manufacture of strip material for building tires; however, the background art and the disclosed invention may also be applicable to other types of manufacturing wherein it is necessary to store strip material in large quantity with weights in excess of several tons.

When forming a strip component, it may be desired to store the component in a manner that prevents the destruction or alteration of any preformed cross-sectional configuration. This is frequently accomplished by storing the component in a spiral spool storage device. The component is placed on a liner that is spirally wound inside the spool. Spacing between adjacent rows of spirally wound liner prevents the adjacent layers of wound material from contacting, thus preserving the preformed cross-sectional configuration of the strip component.

US-A- 5,412,132, JP-A- 61-111261, and EP-A- 621,124 illustrate such storage devices. US-A- 5,412,132 discloses a spool with stepped flanges wherein a liner of increasing width rests on the stepped flanges to support the component within the spool storage device. JP-A- 61-111261 discloses a spool formed with protrusions for the edges of a liner to rest upon. EP-A- 621,124 discloses a spiral spool storage device wherein the edges of the liner rest in continuous spiral grooves formed on the inner face of the spool flanges.

Because the space provided for the edges of the liner are of a relatively small dimension, the liner must be precisely fed to the storage spool. JP-A- 61-111261 discloses first feeding the liner through a fixed metal plate. The plate has an arcuate shape with flanged sides causing the plate to have a width less than the width of the liner. The liner is fed through the plate, inside the flanges, reducing the effective width of the liner. After the liner passes through the plate, the liner is feed onto the spool. The liner returns to its original width after once it is placed onto the spool, known in the art as the liner "popping" into place.

EP-A- 621,124 also teaches reducing the effective width of the liner prior to feeding it into position on the spiral spool. Three different methods of reducing the liner width are disclosed. Two methods employ the use of curved bars through which the liner passes. The curved bars are in a fixed angular relationship with the rod upon which the bars are attached. The third method disclosed employs two pairs of deflecting bars. The first pair initially deflects the edges of the liner and the second pair slides relative to the spiral spool to ensure proper positioning of the liner onto the spool.

While the above methods accomplish the goal of delivering the liner to the spiral spool, these methods require precise placement of the liner to prevent the liner from popping out of place, and to prevent folding and creasing. When such problems do occur with the liner, the continuous manufacturing of the component must be stopped to resolve the problem. The present invention employees a method of delivering the liner to the spiral spool in a manner and by an apparatus which overcomes these limitations and issues of the known delivery systems. In patent application EP-A- 1149787, published on 31.10.2001, the present inventors disclose a method for delivering a continuous strip material to a spool upon which it is to be wound. That method includes the step of reducing the effective width of the continuous strip material prior to its being wound on the spool by shaping the strip material into an arcuate cross-section. The shaping means is rotatable about an axis parallel with the axis of the spool. The method includes moving the shaping means axis of rotation while winding the strip material on the spool and maintaining the shaping means axis of rotation parallel with the spool.

These features enable the stored material to survive vertical storage without distortion of the strip cross-sectional profile.

A useful application of the above-mentioned method was found to be the storage of continuous lengths of truck tire tread material. A commercial truck tire tread, when cut an average length of 2.8 meters (112 inches), weighs about 17 to 21 kg. Some very heavy treaded commercial truck tires weigh as much as 55 kg (123 pounds). A conventional method of stacking precut strips of tread in a bear trap device can accommodate about 50 treads. This method of storing individual tread lengths in racks is commonly referred to as booking the treads. As these treads are cooled, shortly after being formed and cut to length, the ends tend to remain relatively larger than the central portion of the tread. This phenomena is often called a dog-bone shaped component. When these treads are applied to a tire carcass, the cut ends are spliced together. This creates a mass imbalance at the splice due to the enlarged ends being joined and the narrow central portion of the tread being about 180° or directly opposite the tread splice. The overall result is a tire with a mass imbalance creating a slight out of round condition and a high potential for a vibration problem.

An object of the present invention is to provide a portable method and apparatus for storing continuous lengths of elastomeric tire components, such as tire treads in volumes equivalent to conventional bear traps.

A second objective of the invention is to provide a relatively compact mobile device for storing the strips with a low center of gravity to insure stable transportation.

### Summary of the Invention

A mobile tandem spool cartridge for loading, storing, and delivering continuous elastomeric strips of tire material from a forming station to a tire building station is disclosed.

The mobile tandem spool cartridge has a mobile frame, a pair of axially adjacent material spools, a pair of liner spools, and a pair of semi-rigid liners.

Each material spool has an independent axis of rotation fixed to the mobile frame. Each liner spool is also attached to the mobile frame and is longitudinally aligned with a material spool and has an axis of rotation parallel to the axis of the aligned material spool. One semi-rigid liner is attached to the axis of rotation of each material spool at a first end and at the axis of rotation of the longitudinally aligned liner spool at a second end. The semi-rigid liner has a length of a sufficient distance to be spirally wound in multi-layers about the axis of the spools.

In the preferred embodiment, the mobile tandem spool cartridge has a plurality of wheels, a braking system, and carries a liner having a liner length of about 75 linear meters or more; preferably each spool has at least a 75 meter capacity, preferably about 90 meters of liner capacity. This yields a tandem strip carrying capacity of 150 meters or more. This enables an average of at least 52 truck tire treads to be carried which is equivalent to the prior art bear trap method of booking precut commercial truck tire treads. This capacity permits 3000 kg (6600 pounds) of material to be handled with relative ease. When used to store smaller light truck or passenger tire tread, the spools can be designed with more windings and thus even greater numbers of treads can be carried.

### Brief Description of the Drawings

Figure 1 is a perspective view of the mobile tandem spool cartridge of the present invention.

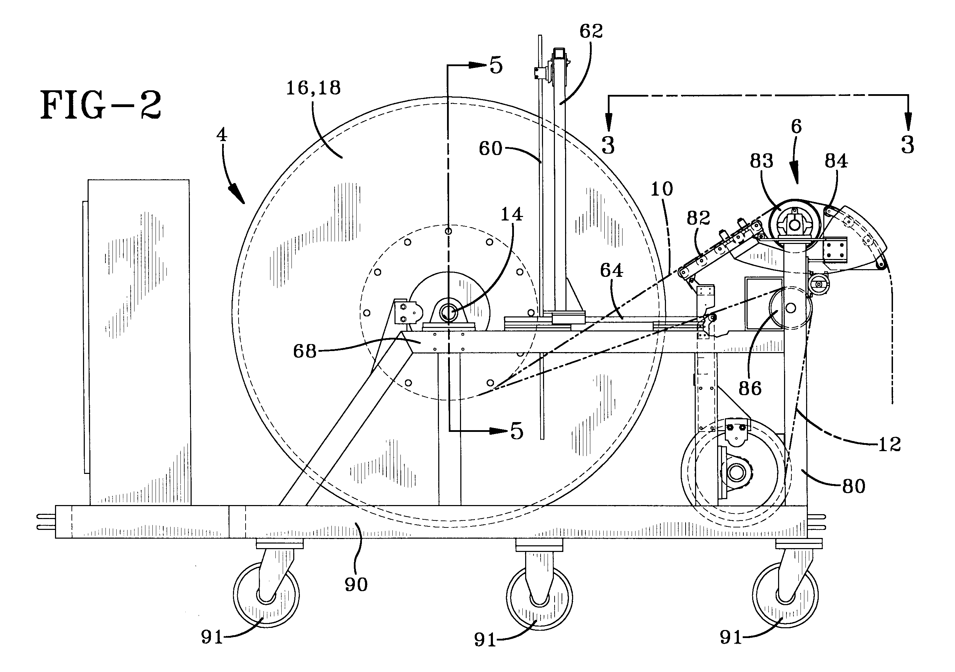

Figure 2 is a plan view of the mobile tandem spool cartridge of Figure 1.
Figure 3 is a top view of the mobile tandem spool cartridge of Figure 1.

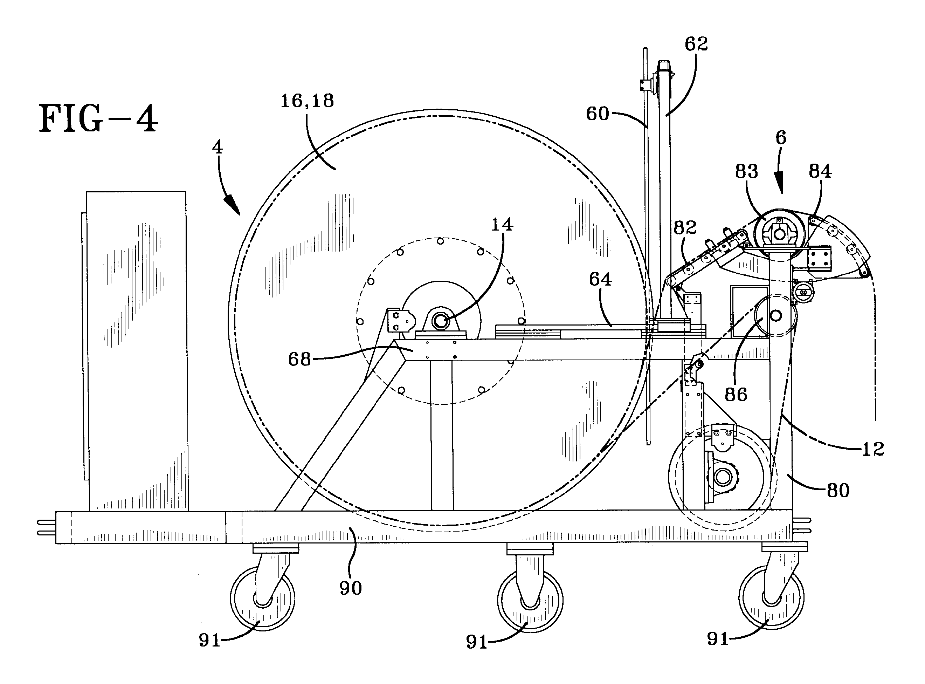

Figure 4 illustrates the spiral spool as the strip component and liner are being wound thereon.
Figure 5 is a cross-sectional view of the spiral spool along line 5-5 of Figure 2.
Figure 6 shows a portion of the semi-rigid liner being deflected and bowed for reentry into the spool.

### Detailed Description of the Preferred Embodiments

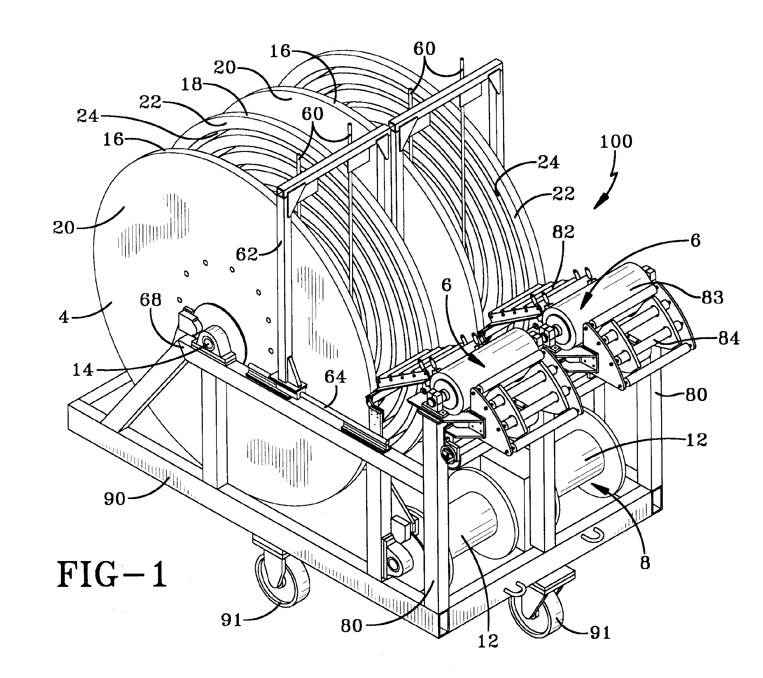

With reference to Figure 1, an apparatus incorporating the present invention, for winding and storing a strip component is illustrated. The apparatus 100 has a spool 4 in which the strip component 10 is wound, a let-off means 6 for the strip component 10, and a liner spool delivery system 8 for the liner 12 upon which the strip component 10 is to be placed. The spool 4 is mounted on an axle 14 coincident with the axis of the spool 4 and upon which the spool 4 rotates. As the spool 4 rotates, the liner 12 is fed from one side of the spool 4 from a liner spool 8, while the strip component 10 is then laid upon the liner 12. The strip component 10 can be unvulcanized elements of a tire, such as sidewalls, tread, apex, or other strip materials that could be susceptible to crushing in conventional storage mechanisms.

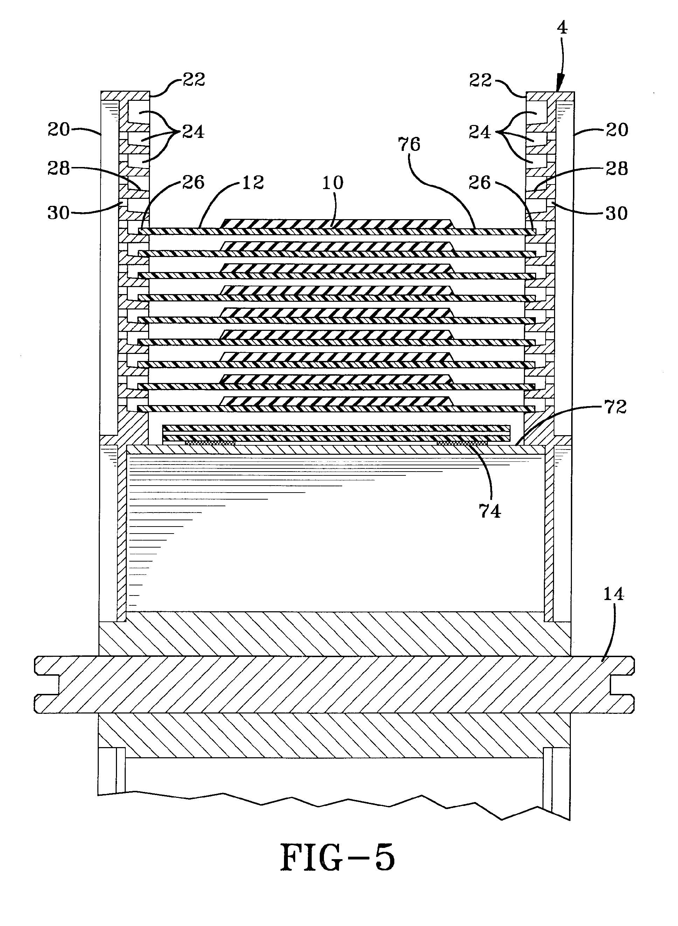

The spool 4 has first and second flanges 16, 18 (see Figures 1 and 5). Each of the flanges 16, 18 has an axially outer surface 20 and an axially inner surface 22. The axially inner surface 22 of the first and second flanges 16, 18 each have a continuous spiral groove 24. The grooves 24 are adapted to receive the edges 26 of the liner 12. The grooves 24 have a radius creating a radial distance between the adjacent turns of each groove 24 that is greater than the combined thickness of the liner 12 and the strip component 10 to be wound into the spool. The radially inner surface 28 of each groove 24 is beveled downwards toward the central axis of the spool 4. In a preferred construction, the radially inward surface 28 is beveled so that it makes an angle of about 10° with a line parallel to the axis of the spool 4. The purpose of the beveling is to facilitate insertion and removal of the liner edges 26.

As shown in Figure 5, the liner 12 has a sufficient width to extend between the spool flanges 16, 18 and permit the liner edges 26 to rest within the spiral grooves 24. The liner 12 must be formed of a strong enough material so that the weight of the strip component 10, when wound into the spool 4, does not cause the liner 12 to deflect and contact or crush the component 10 stored upon radially inner windings of the component 10 and liner 12. Preferred materials for the liner 12 include rigid polyethylene terephthalate, polypropylene, and other similar materials.

The spool 4 can also have a series of openings 30 in the axially outer surfaces 20 of the flanges 16, 18 (see Figure 5). Because the strip component 10 is preferably loaded onto the spool 4 directly from an extruder, it is still hot and in various stages of curing. The openings 30 of the spool 4 permits air to flow back and forth through the openings 30 and over the strip component 10.

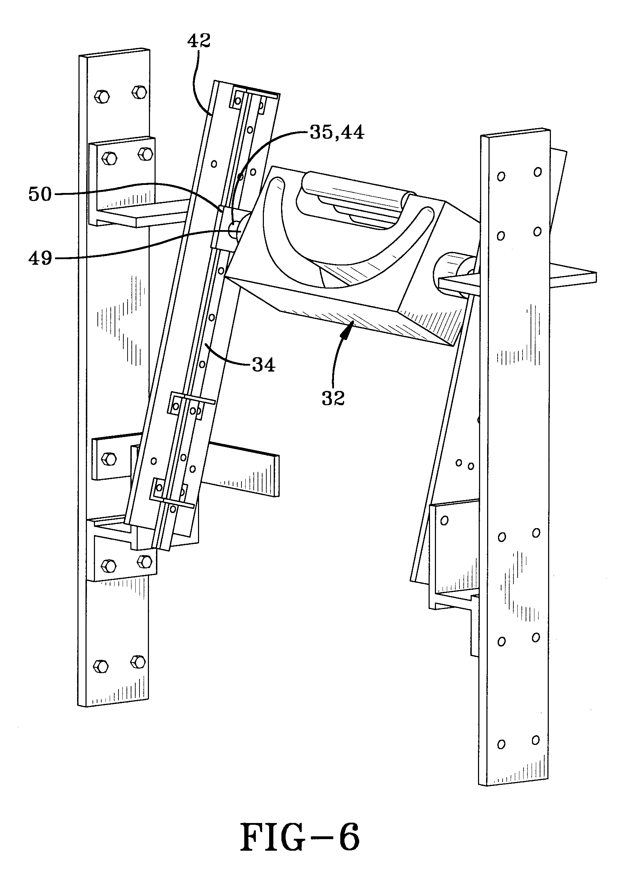

As previously discussed, for proper delivery of the liner 12 to the spool 4, it is desired to reduce the effective width of the liner 12, i.e. shaping the liner 12 into an arcuate cross-sectional configuration, as shown in Figure 6. This is accomplished within the liner delivery system 8 which incorporates a pre-former 32 mounted on a pair of Thomson rails 34; the Thomson rails 34 permit the pre-former 32 to travel vertically. The pre-former 32 is mounted to the Thomson rails 34 by means of the bearing box 50. The bearing box 50 is provided with an internal bushing. The bushing allows the pre-former 32 to pivot freely about a longitudinal axis 35, enabling the pre-former 32 to remain in a perpendicular alignment to the liner 12 as the liner 12 passes through the pre-former 32. The pre-former 32 is the shaping means which shapes the liner 12 into the desired arcuate cross-sectional configuration.

It would be appreciated by those in the art that while a particular roll combination and construction has been disclosed, other roll designs may be substituted for the disclosed rolls so long as a desired trough shaped path is maintained for the liner 12 to travel through when passing through the pre-former 32.

As noted above, axle 44 extends through the end frames 42 and into a bearing box. The bearing box permits the pre-former 32 to pivot about the longitudinal axis 35 of the axle 44 (see Figures 6), as the pre-former 32 travels up and down the Thomson rails 34. The bearing box 50 is provided with an internal bushing. The axle 44 rests in the bushing. The bushing allows the axle 44 to freely pivot about the longitudinal axis 35 of the axle 44, enabling the pre-former 32 to remain in a perpendicular alignment to the liner 12 as the liner 12 passes through the pre-former 32. It is the stiffness of the liner 12 as it passes through the pre-former 32 that causes the pre-former 32 to pivot. The pre-former 32 also travels the Thomson rails 34 in order to maintain alignment of the liner 12 coming out of the pre-former 32 with the location where the liner 12 is fed onto the spool 4. This permits a smoother transition of the liner 12 from the liner spool 13 to the storage spool 4. Thus, during operation of the liner delivery system 8, the pre-former 32 moves in two different directions about two different planes. The pre-former 32 rotates about a single axis 35, parallel to the axis of the spool 4, and travels vertically along the Thomson rails 34. It is this combination of movement that maintains the liner 12 in the desired delivery configuration and orientation to the spool 4, and permits the liner 12 to be properly delivered into the storage spool 4.

Adjacent to the spool 4 is a set of deflecting bars 60 mounted on a sliding platform 62. The sliding platform 62 is translatable along a rail 64 that is mounted to a frame 68 upon which the spool 4 is mounted. The purpose of the sliding platform 62 is to adjust the deflecting qualities of the deflecting bars 60 as the spool 4 fills with liner 12 and strip component 10. When the spool 4 is nearly empty, the deflecting bars 60 are fairly close to the axle of the spool 4. As the spool 4 rotates and becomes filled with liner 12 and strip component 10, the deflecting bars 60 slide radially outwardly away from the axis of the spool 4.

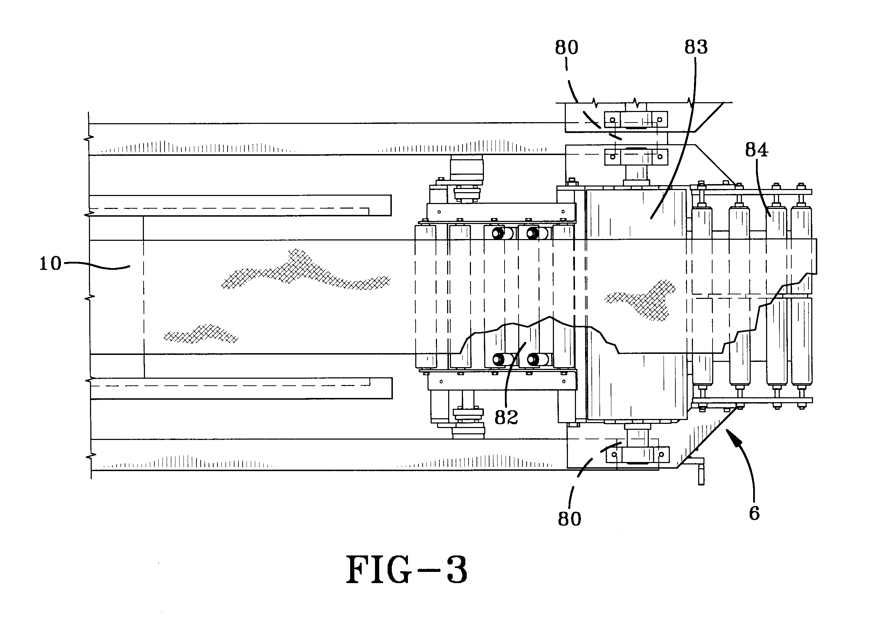

With reference to Figures 1 and 3, the method by which the liner 12 and strip component 10 is loaded onto the spool 4 will be described. When the spool 4 is empty and being prepared for storing strip material 10, about one revolution of the end of the liner 12 is wrapped around the core 72 of the spool 4 and secured thereto by means such as hook and loop strips 74. The edges of the liner 26 are initially threaded into the first opening of the groove 24. Once the liner 12 has been correctly threaded into the groove 24, it follows the spiral pattern of the groove 24 and thus continues to be threaded into the entire spool 4 as the liner edges 26 are pulled into the groove 24. As the spool 4 rotates 180°, a newly extruded strip of strip component 10 is laid on the radially outward surface of the liner 12. The process continues with the spool 4 rotating and loading liner 12 and strip component 10 into the spool 4 in a spiral fashion until the spool 4 is full.

As shown in Figure 1, the semi-rigid liner 12 is preferably of a length sufficient to accommodate the capacity handled by one-half of a conventional bear trap storage rack. The liner 12 is fixed at a first end to the axis of the material spool 4 and at the opposite or second end to the axis of the liner spool 8.

When the apparatus 100 is used in conjunction with a tread strip 10 as the strip component, as mentioned, as the tread strip 10 is formed, it is transferred onto a tread guide mechanism 6. The tread guide mechanism 6 includes a take-off conveyor 82, a roller 83, and a feed conveyor 84. The entire tread guide mechanism 6 as illustrated is attached to the upper ends of a pair of vertical columns 80 mounted to the frame 90.

As the tread 10 is fed onto the guide mechanism 6, the spools 4 are rotated such that the liner 12 is spirally fed into the grooves 24 of the spool ends 16, 18. Simultaneously the tread 10 is laid onto the liner 12 and as the liner 12 moves the tread 10 and liner 12 are spirally loaded onto the material carrying spool 4.

The liner 12 as shown passes over a roller 86 positioned below the guide mechanism 6 and mounted to the two vertical columns 80. The liner deflecting bars 60 are shown at a location very close to the spools axis 14 when the tread 12 is being initially loaded. These deflection bars 60 slide to a location equal to or greater than the radius of the spool ends 16, 18 as the spool 4 is fully loaded. Phantom lines show the change in a liner location as the spool 4 rotates.

As further shown, once one spool 4 is loaded, the entire mechanism 100 can be moved to fill the second spool 4 or if a twin head extruder is forming two strips of tread 10, then the second spool 4 can be loaded simultaneously with the first spool 4.

Preferably the drive mechanism for the mechanism is separate from the tandem cartridge. In practice, the spool 4 is driven by a mechanism at the extruder. As the spool 4 is rotated, the liner automatically is pulled into the spool. On unwinding at the server stations, the liner 12 is driven at the liner spool as the strip is fed onto the server. By separating these drive mechanisms from the tandem cartridge, the design becomes much less costly permitting large numbers of mobile cartridges to be made, while the costly drive mechanisms (not illustrated) are located at the extruder or the servers. This feature greatly reduces the cost of this storage system.

An important feature of the spools 4 is that both spools 4 have independent axles 14 permitting the rotation of one spool 4 while the other is stationary, simultaneous rotation or rotation at different speeds. It is possible to actually load one spool 4 while unloading the other. In this application, the mobile tandem cartridge acts like a buffer between an inline extruder and one or more tire building stations. The extruder, therefore, can run at a constant speed optimum for its purpose of strip formation while the tire building station can run at its stop/start cycle speed required to fabricate the tire. Tire engineers have always appreciated that stop/start actions were not compatible with a steady state extruder process. The use of the present invention 100 permits the extruder to run at an optimum speed either off-line or closely coupled to the tire building equipment.

An important feature of the present invention is the mobility of the tandem spool cartridges 100. The frame 90 of the vehicle preferably has three or more heavy duty wheels 91 that permit the apparatus 100 to be moved. Each spool 4 has a two meter diameter which when mounted on the frame 90 has a height of just under 7 feet. As previously mentioned, the mobile tandem spool cartridge 100, when the tandem spools 4 are fully loaded, has a gross vehicle weight of about 8,000 pounds or 4 ton, 6,600 pounds being the strip material 10. The movement of the spools 4 is facilitated by the use of a tow motor, a commercially available motorized truck for material handling.

The movement of this large amount of material is accomplished safely due in part to the concept of using two spools of 2 meter diameter size in a side-by-side design. This widens the base of the frame 90 and lowers the center of gravity of the apparatus 100 when compared to a single spool of the same carrying capacity. A single spool would result in a 3 meter diameter spool effectively raising the center of gravity correspondingly by an amount equal to the shift in the axis of rotation of the material spool or an increase about 0.5 meter. This upward shift of the mass center would require the base of the frame 90 and the wheels 91 to be widened even further than the tandem apparatus 100 of the present invention.

The apparatus 100 of the present invention has a base width sufficiently narrow to easily pass down the isleways of a modern tire building factory.

At full speed, an extruder forming two treads simultaneously can fill the mobile tandem cartridge 100 in about 5 minutes. Three of these cartridges 100 can supply enough tread for one shifts' production at a single tire building machine. The prior art bear trap rack required two material handlers and one operator at the tire building station. The use of full mobile tandem cartridge 100 at the beginning of the shift eliminates the need for two material handlers. More importantly, the fact that in the case of heavy commercial truck tires, each tread weights about 22 kg to 27 kg (50 to 60 pounds) meant the material handlers had to physically move these large awkward treads. The present invention has far superior ergonomics and thus better overall productivity. These benefits alone would justify the use of these mobile tandem cartridges 100, but the component quality also has been dramatically improved, as well.

These continuous strips 10 maintain the proper cross-sectional profile because the liner 12 is semi-rigid which prevents component sagging. Each layer is only subjected to only the weight of the tread it is supporting. The treads being cut to length at the tire building station are even more accurately made without a need to undercut and stretch to create the splice joint. This aides in overall tire uniformity as does the elimination of the precut dog-bone shape. These tread induced uniformity benefits greatly improves the tires radial runout characteristics, eliminates tread mass imbalances which has dramatically reduced the need to grind tires to remove high spots.

## Claims

1. A mobile tandem spool cartridge (100) for loading, storing, and delivering continuous elastomeric strips (10) of tire material from a forming station to a tire building station, the mobile tandem spool cartridge **characterized by**:
a mobile frame (90);
a pair of axially adjacent material spools (4), each material spool having an independent axis of rotation (14) fixed to the mobile frame (90);
a pair of liner spools (8), each liner spool being attached to the mobile frame and longitudinally aligned with a material spool (4) and having an axis of rotation parallel to the axis (14) of the aligned material spool;
a pair of semi-rigid liners (12), one semi-rigid liner being attached to the axis of rotation of each material spool (4) at a first end and at the axis of rotation of the longitudinally aligned liner spool (8) at a second end, the semi-rigid liner having a length of a sufficient distance to be spirally wound in multi-layers about the axis (14) of the spools.

2. The mobile tandem spool cartridge of claim 1 wherein the mobile frame (90) has a plurality of wheels (91).

3. The mobile tandem spool cartridge of claim 1 or 2 wherein the mobile frame (90) has a braking system.

4. The mobile tandem spool cartridge of claim 1, 2 or 3 wherein the liner length is about 100 linear feet (30 m) or more for each liner (12).

5. A method of delivering continuous strips (10) of material onto spools (4) for intermediate storage and transit to a tire building station, the method comprising:
supplying two discrete strips (10) of material simultaneously from one or more strip forming station onto separate liners;
simultaneously winding each liner (12) with a strip (10) of material onto a material spool (4); and
cutting each strip when the respective spool is full.

6. The method of claim 5 further comprises unwinding the loaded spools (4) simultaneously feeding the two distinct strips (10) of material to one or more tire building stations.
